# EUROPÄISCHE PATENTSCHRIFT

(11) **EP 2 020 350 B1**
(45) Veröffentlichungstag und Bekanntmachung des Hinweises auf die Patenterteilung: **24.10.2012**
(21) Anmeldenummer: 08104104.8
(22) Anmeldetag: 27.05.2008
(51) Int. Cl.: B60S 1/08, G01N 21/45

(54) **System zum Erfassen optischer Signale mit einem Regensensor und Verfahren**
System for capturing optical signals with a rain sensor and method
Système d'enregistrement de signaux optiques à l'aide d'un capteur de pluie et procédé

(30) Priorität: 25.07.2007 DE 102007034606
(43) Veröffentlichungstag der Anmeldung: 04.02.2009
(73) Patentinhaber: ROBERT BOSCH GMBH, 70442 Stuttgart (DE)
(72) Erfinder: Steinmetz, Martin, 70439, Stuttgart (DE); Wolf, Frank, 77815, Buehl (DE)

(56) Entgegenhaltungen:
- WO-A1-2006/015905
- DE-A1- 19 740 364
- DE-U1- 29 924 958

## Beschreibung

Die Erfindung betrifft ein System zum Erfassen optischer Signale mit einem Regensensor gemäß Patentanspruch 1 und ein Verfahren gemäß Anspruch 12.

Systeme zum Erfassen optischer Signale sind in den verschiedensten technischen Bereichen, wie beispielsweise im Bereich von Regensensoren, bekannt.

Bei Regensensoren ist es wünschenswert, Störlicht auszufiltern, damit die Steuerung des Scheibenwischers korrekt funktioniert.

### Stand der Technik

Aus DE 197 40364 A1 ist eine Vorrichtung und ein Verfahren zum Betreiben eines Regensensors bekannt. Dabei wird ein optoelektrischer Regensensor zur Erfassung der Benetzung einer Scheibe mit Feuchtigkeit zur benetzungsabhängigen Ansteuerung einer Einrichtung, insbesondere einer Scheibenwischvorrichtung für Kraftfahrzeuge beschrieben. Ein Anteil der Umgebungsstrahlung des Sensorsignals wird in einem ersten Intervall nahezu eliminiert und daher bei der nachfolgenden Erfassung des Sensorsignals in einem für die Ansteuerung der Scheibenwischvorrichtung relevanten zweiten Intervall nicht mehr berücksichtigt. Die Vorrichtung umfasst erste Mittel, die in dem ersten Intervall das Sensorsignal erfassen und ein der Umgebungsstrahlung entsprechendes Störlichtsignal ermitteln, das einem Regler zugeführt wird. Der Regler regelt in Abhängigkeit des Störlichtsignals im Stromkreis des Empfängers angeordnete Kompensationsmittel und zweite Mittel, die in dem zweiten dem ersten direkt nachgeordneten Intervall des Sensorsignals erfassen und ein im Wesentlichen der Senderstrahlung entsprechendes Nutzsignal ermitteln.

### Offenbarung der Erfindung

Die Aufgabe der Erfindung besteht darin, ein verbessertes System zum Erfassen elektromagnetischer Strahlung, insbesondere einen verbesserten Regensensor bereitzustellen.

Die Aufgabe der Erfindung wird durch das System gemäß Anspruch 1 und durch das Verfahren gemäß Anspruch 12 gelöst.

Weitere vorteilhafte Ausführungsformen der Erfindung sind in den abhängigen Ansprüchen angegeben.

Ein Vorteil des erfindungsgemäßen Systems besteht darin, dass ein Signalanteil der elektromagnetischen Strahlung, der beispielsweise eine festgelegte Wiederholfrequenz aufweist, als Störstrahlung mit einem Erkennungsmittel erkannt wird. In einer Weiterbildung wird die Störstrahlung der elektromagnetischen Strahlung herausgefiltert wird. Auf diese Weise ist es möglich, Störsignale zu erkennen und aus der elektromagnetischen Strahlung herauszufiltern.

In einer weiteren Ausführungsform kann die Erkennungsfunktion über einen einstellbaren Parameter eingestellt werden. Dazu kann eine Eingabeeinheit vorgesehen sein. Auf diese Weise ist es möglich, individuell die Erkennungsfunktion, und gegebenenfalls die Filterfunktion der Filtereinheit einzustellen. Damit ist eine verbesserte Flexibilität des Systems gegeben.

In einer weiteren Ausführungsform weist die Filtereinheit ein einstellbares Bandpassfilter auf. Damit ist es möglich, eine verbesserte Filterung der elektromagnetischen Strahlung durchführen zu können.

In einer weiteren Ausführungsform wird mithilfe des Erkennungsmittels ein Warnlicht mit einer festgelegten Wiederholfrequenz herausgefiltert. Das Warnlicht kann beispielsweise ein Blaulicht eines Polizeifahrzeuges oder ein Rotlicht eines Rettungsfahrzeuges sein. In einer weiteren Ausführungsform kann mithilfe eines Parameters eine Wellenlänge einer elektromagnetischen Strahlung eingestellt werden, die mit der festgelegten Wiederholfrequenz als Störstrahlung erkannt wird und gegebenenfalls aus der elektromagnetischen Strahlung herausgefiltert werden soll. Auch dadurch ist eine weitere Verbesserung des Systems gegeben.

In einer weiteren Ausführungsform wird ein Signalanteil mit einer Wiederholfrequenz in der elektromagnetischen Strahlung als Störstrahlung erkannt und gegebenenfalls herausgefiltert, dessen zeitliche Abstände zwischen 0,1 und 5 s liegen. Auf diese Weise werden Signale aus der elektromagnetischen Strahlung herausgefiltert, die Störsignale insbesondere für einen Regensensor darstellen.

Die Erfindung wird im Folgenden anhand der Figuren näher erläutert. Es zeigen
Fig. 1 eine schematische Darstellung eines Systems zum Erfassen elektromagnetischer Strahlung mit einem Regensensor und einem Scheibenwischer und
Fig. 2 ein Messdiagramm einer elektromagnetischen Strahlung mit einem Störsignal.

### Kurze Beschreibung der Zeichnungen

Die Erfindung wird im Folgenden am Beispiel eines Regensensors für ein Kraftfahrzeug beschrieben, wobei jedoch die Anwendung der Erfindung auch bei anderen elektromagnetischen Sensoren, insbesondere bei Lichtsensoren, eingesetzt werden kann.

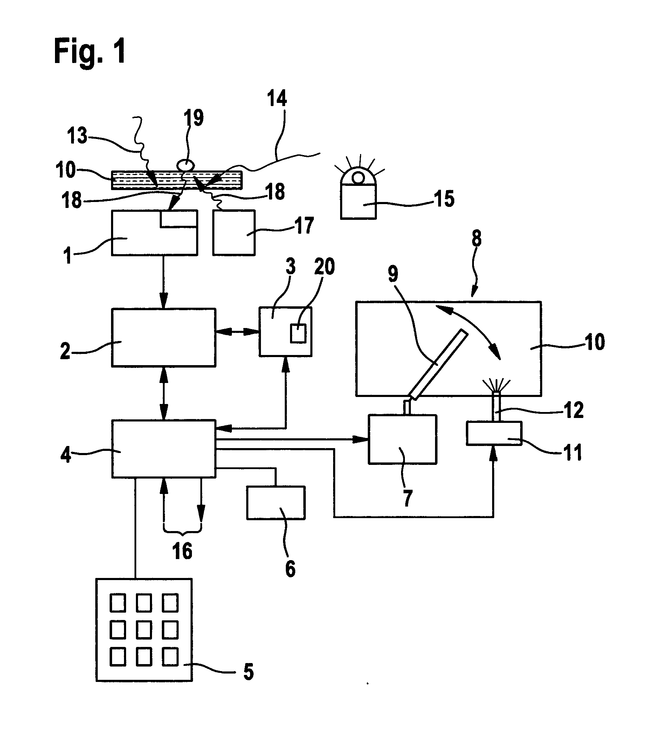

Fig. 1 zeigt in einer schematischen Darstellung ein System, beispielsweise ein Regensensor zum Erfassen einer elektromagnetischen Strahlung 13, 14, 18 mit einem Sensor 1 und mit einer Auswerteeinheit 2, die mit dem Sensor 1 verbunden ist. Der Sensor 1 erfasst die elektromagnetische Strahlung 13, 14, 18 und gibt diese an die Auswerteeinheit weiter. Die Auswerteeinheit 2 ist mit einer Erkennungseinheit 21 verbunden, die eine Filtereinheit 3 aufweisen kann. Weiterhin steht die Auswerteeinheit 2 mit einem Steuergerät 4 in Verbindung. Das Steuergerät 4 steht zudem mit der Erkennungseinheit 21 und/oder mit der Filtereinheit 3 in Verbindung. Weiterhin ist das Steuergerät 4 mit einer Anzeige 6 und mit einer Tastatur 5 verbunden. Zudem weist das Steuergerät 4 Ein- und Ausgänge 16 auf, über die weitere Signale erfasst oder ausgegeben werden. Das Steuergerät 4 ist zudem mit einem Motor 7 verbunden, der einen Scheibenwischer 9 betätigt, der auf einer Scheibe 10 angeordnet ist. Die Scheibe 10 kann Teil eines Kraftfahrzeuges sein. Der Motor 7 und der Scheibenwischer 9 stellen eine Scheibenwischanlage 8 dar. Weiterhin ist das Steuergerät 4 mit einer Waschanlage 11 verbunden. Die Waschanlage 11 steht mit einem Wasserreservoir in Verbindung und weist eine Sprühdüse 12 auf, mit der Wasser auf die Scheibe 10 gesprüht werden kann.

Zudem ist eine Sendeeinheit 17 vorgesehen, die im Bereich der Scheibe 10 angeordnet ist und eine elektromagnetische Messstrahlung 18 auf die Scheibe 10 ausstrahlt. Die Sendeeinheit 17 ist beispielsweise auch Teil des Regensensors. Der Sensor 1 stellt eine Empfangsdiode des Regensensors und die Sendeeinheit 17 eine Sendediode des Regensensors dar. In Abhängigkeit davon, ob die Scheibe 10 mit Wasser 19 bedeckt ist, wird mehr oder weniger Messstrahlung 18 zurück auf den Sensor 1 reflektiert. Der Sensor 1 erfasst zusätzlich elektromagnetische Umweltstrahlung 13, die von der Sonne oder sonstigen Lichtquellen auf die Scheibe 10 abgegeben werden.

Des Weiteren ist eine Störquelle 15 dargestellt, die eine Störstrahlung 14 auf die Scheibe 10 abgeben kann und somit ebenfalls vom Sensor 1 erfasst wird. Die Störquelle 15 kann beispielsweise jede Art von künstlicher Lichtquelle sein, die ein getaktetes Lichtsignal oder eine getaktete elektromagnetische Strahlung abgibt. Beispielsweise kann die Störquelle 15 ein Blaulicht eines Polizeifahrzeuges oder eines Sonderfahrzeuges oder ein Licht einer Warnlampe eines Rettungsfahrzeuges sein. In der Regel haben Störquellen 15, die von Sonderfahrzeugen ausgehen, eine festgelegte Wellenlänge, beispielsweise blau oder orange. Auch die von den Störquellen 15 ausgehenden elektromagnetischen Strahlen beeinflussen als Störstrahlung den Sensor 1 und führen evtl. zu einer Fehlfunktion der Scheibenwischanlage und/oder der Waschanlage.

Die Funktionsweise des Systems gemäß Fig. 1 wird im Folgenden erläutert.

Der Sensor 1 ist als elektromagnetischer Sensor aufgebaut und wandelt elektromagnetische Strahlung in ein elektrisches Signal. Der Sensor 1 erfasst eine elektromagnetische Strahlung und gibt diese als Empfangssignal an die Auswerteeinheit 2 weiter. In diesem Beispiel wird die Störstrahlung 14, die Umweltstrahlung 13 und die reflektierte Teststrahlung als Empfangssignal vom Sensor 1 erfasst. Die Auswerteeinheit 2 ist mit der Erkennungseinheit 21 und/oder mit der Filtereinheit 3 verbunden. Die Erkennungseinheit 21 wertet das Empfangssignal, das vom Sensor 1 an die Auswerteeinheit 2 weitergegeben wird, dahingehend aus, ob eine Störstrahlung enthalten ist. Die Erkennungseinheit 21 weist einen Speicher auf, in dem wenigstens ein Parameter einer Störstrahlung abgespeichert ist. Die Störstrahlung kann beispielsweise durch die Frequenz der elektromagnetischen Strahlung oder eine Wiederholfrequenz der Störstrahlung festgelegt sein. Erkennt die Erkennungseinheit 21 bei der Auswertung des Empfangssignals eine vorgegebene Störstrahlung unter Berücksichtigung des abgespeicherten Parameters, so gibt die Erkennungseinheit ein entsprechendes Signal an die Auswerteeinheit 2, die dieses an das Steuergerät 4 weiterleitet. Erhält die Steuereinheit 4 ein Signal von der Erkennungseinheit 21, das das Vorliegen einer Störstrahlung anzeigt, so verändert die Steuereinheit 4 die Ansteuerung des Scheibenwischers und geht in eine Sondersteuerung über. Die Sondersteuerung kann darin bestehen, dass ein automatisches Wischen des Scheibenwischers, das vom Regensensor vorgegeben wird, von der Steuereinheit 4 blockiert wird. Weiterhin kann die Sondersteuerung darin bestehen, dass bei Ansteuerung des Scheibenwischers durch das Erkennen von Nässe durch den Regensensor der Scheibenwischer mit einem festgelegten Wischintervall betätigt wird. Das Wischintervall kann beispielsweise aus wenigstens einem dem Erkennen einer Störstrahlung vorhergegangenen Wischintervall bestimmt, oder festgelegt sein. In einer weiteren Ausführungsform wird das Empfangssignal an die Filtereinheit 3 weitergeleitet. Die Filtereinheit 3 filtert von dem Empfangssignal, das vom Sensor 1 an die Auswerteeinheit 2 weitergegeben wird, einen Signalanteil heraus, der beispielsweise eine festgelegte Wiederholfrequenz aufweist. Die Erkennungsfunktion der Erkennungseinheit und/oder die Filterfunktion der Filtereinheit 3 wird mithilfe eines Parameters festgelegt, der in der Erkennungseinheit 21 oder in der Filtereinheit 3 abgelegt ist und abhängig von der gewählten Ausführungsform vom Steuergerät 4 verändert werden kann. Zudem kann über die Anzeige 6 der Parameter und/oder Daten der Filterfunktion, wie z.B. die Wiederholfrequenz einer Störstrahlung, die erkannt oder herausgefiltert wird, auf der Anzeige 6 dargestellt werden. Zudem kann über die Tastatur 5 über ein entsprechendes Bedienmenü der Parameter verändert werden. Beispielsweise kann mithilfe des Parameters die Wiederholfrequenz eingestellt werden, und damit festgelegt werden, welcher Signalanteil der elektromagnetischen Strahlung erkannt und/oder ausgefiltert werden soll. Beispielsweise kann die Wiederholfrequenz mithilfe eines Wiederholfrequenzbereiches festgelegt werden, wobei der Wiederholfrequenzbereich beispielsweise elektromagnetische Strahlungen umfasst, deren zeitliche Abstände zweier Strahlungspulse zwischen 0,2 s und 5 s liegt. Auf diese Weise kann mithilfe des Parameters festgelegt werden, dass jede gepulste elektromagnetische Strahlung erkannt und/oder ausgefiltert wird, deren Wiederholfrequenz im Bereich zwischen 0,2 s und 5 s liegt.

In einer weiteren Ausführungsform kann mithilfe des Parameters ein entsprechendes Bandpassfilter festgelegt werden, sodass elektromagnetische Signalanteile, deren Wiederholfrequenz einen festgelegten Wert oder deren Wiederholfrequenz in einem festgelegten Wertebereich liegt, mithilfe der Filtereinheit in dem Empfangssignal erkannt oder aus dem Empfangssignal herausgefiltert wird.

Zudem kann mithilfe eines weiteren Parameters festgelegt werden, dass zusätzlich zur Wiederholfrequenz auch eine festgelegte Wellenlänge der elektromagnetischen Strahlung als Signalanteil aus dem Empfangssignal herausgefiltert wird. Beispielsweise kann auf diese Weise festgelegt werden, dass ein Blaulicht und/oder ein Orangelicht, das die festgelegte Wiederholfrequenz aufweist, als Störsignal erkannt oder aus dem Empfangssignal herausgefiltert wird. Bei der Festlegung der Frequenz des Signalanteils, der aus dem Empfangssignal herausgefiltert werden soll, kann ein Frequenzbereich oder ein Wellenlängenbereich der elektromagnetischen Strahlung über die Vorgabe des Parameters eingestellt werden. Somit ist es möglich, zusätzlich zur Wiederholfrequenz auch noch ein festgelegtes Farbspektrum mit der entsprechenden Wiederholfrequenz aus dem Empfangssignal herauszufiltern.

In einer weiteren Ausführungsform kann die Erkennungseinheit 21 das vom Sensor 1 übermittelte Empfangssignal auf Signalanteile hin überprüfen, die eine Wiederholfrequenz in einem festgelegten Frequenzbereich aufweisen. Erkennt die Erkennungseinheit 21 beispielsweise einen Signalanteil im Empfangssignal, der eine Wiederholfrequenz aufweist, die beispielsweise zwischen 0,1 und 5 s als zeitliche Periode zwischen zwei Pulsen aufweist, dann kann die Erkennungseinheit 21 diese Information über die Auswerteeinheit 2 an das Steuergerät 4 weitergeben. Das Steuergerät 4 kann in der Weise programmiert sein, dass aufgrund des erkannten Signalanteils der Parameter zum Herausfiltern genau dieses Signalanteils entsprechend angepasst wird und an die Filtereinheit 3 weitergegeben wird. Auf diese Weise wird ein selbstlernendes und sich adaptierendes System erhalten, das automatisch Signalanteile mit einer Wiederholfrequenz aus dem Empfangssignal herausfiltert. Abhängig von der gewählten Ausführungsform kann nach Erkennen eines Signalanteils mit einer festgelegten Wiederholfrequenz eine entsprechende Anzeige auf der Anzeige 6 ausgegeben werden. Eine Bedienperson kann nach Überprüfung der Anzeige 6 durch eine entsprechende Eingabe über die Tastatur 5 und ein entsprechendes Bedienmenü entscheiden, ob der erkannte Störsignalanteil durch die Filtereinheit 3 aus dem Empfangssignal herausgefiltert werden soll. In dem dargestellten Beispiel wird das Blaulicht der Störquelle 15 aus dem Empfangssignal herausgefiltert.

Die Auswerteeinheit 2 gibt entweder das empfangene Empfangssignal oder nach der Filterung das gefilterte Empfangssignal an das Steuergerät 4 weiter. Das Steuergerät 4 vergleicht das Empfangssignal mit wenigstens einem abgelegten Referenzwert und erkennt aufgrund des Vergleiches, ob ein Stellglied, wie beispielsweise die Scheibenwischanlage 8 oder die Waschanlage 11, betätigt werden soll.

Die Scheibenwischanlage 8 wird vom Steuergerät 4 mithilfe des Motors 7 betätigt, wenn das gefilterte Empfangssignal einem abgelegten Referenzsignal entspricht, das einer nassen Scheibe 10 entspricht. Zudem kann ein Referenzwert abgespeichert sein, der einer verschmutzten Scheibe 10 entspricht und das Steuergerät 4 steuert bei Erkennen einer verschmutzten Scheibe, d.h. wenn das gefilterte Empfangssignal dem Referenzwert verschmutzte Scheibe entspricht, die Waschanlage 11 entsprechend an.

Die Filtereinheit 3 kann beispielsweise mithilfe eines Softwarefilters, beispielsweise als Bandpassfilter 20, realisiert sein, der in der Filtereinheit integriert ist.

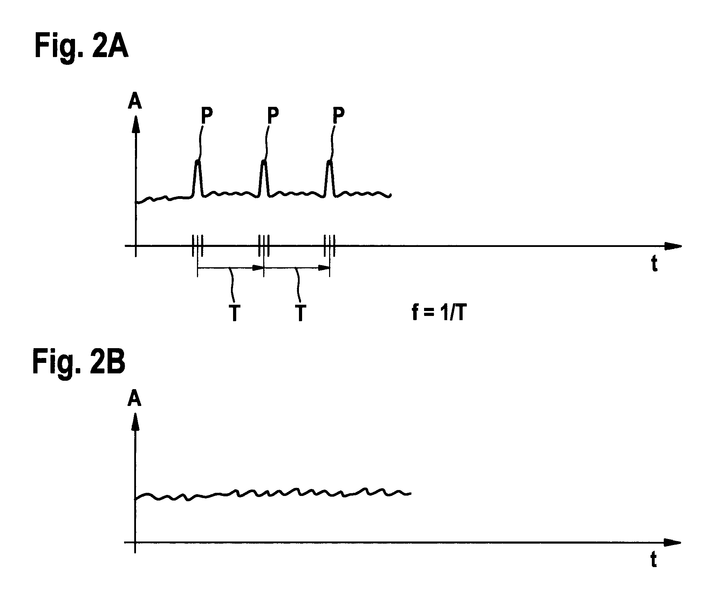

Fig. 2A zeigt in einer schematischen Darstellung ein Empfangssignal, das vom Sensor 1 empfangen wird und das über die Zeit t aufgetragen ist. In dem Diagramm Fig. 2A ist die Amplitude der elektromagnetischen Strahlung über die Zeit t aufgetragen. Anhand des Diagramms der Fig. 2A ist deutlich zu erkennen, dass das Empfangssignal einen gepulsten Signalanteil P aufweist, der sich in Form von Amplitudenspitzen darstellt, die sich mit zeitlich festen Abständen T wiederholen. Liegt nun der zeitliche Abstand T zwischen zwei Pulsen in dem festgelegten Wiederholfrequenzbereich, der von der Filtereinheit 3 herausgefiltert wird, so wird das gepulste Störsignal erkannt und/oder aus dem Empfangssignal entfernt. Beträgt der zeitliche Abstand T 0,1 Sekunden, dann liegt eine Wiederholfrequenz von 10 Hz vor. Beträgt der zeitliche Abstand beispielsweise 5 Sekunden, dann liegt eine Wiederholfrequenz von 0,2 Hz vor. Gepulste Signalanteile können beispielsweise dadurch erkannt werden, dass die Amplitude einer Frequenz der elektromagnetischen Strahlung um mehr als 15% für eine festgelegte Zeitdauer, d.h. eine Pulsbreite, ansteigt. Fig. 2B zeigt ein entsprechendes gefiltertes Empfangssignal, dessen Amplitude wieder über die Zeit t aufgetragen ist. Aufgrund der Anordnung der Filtereinheit 3 ist das gepulste Störsignal P entfernt worden und somit hat das gepulste Störsignal P keinen Einfluss mehr auf die Beurteilung durch das Steuergerät 4, ob eine Betätigung eines Stellgliedes, wie beispielsweise der Scheibenwischanlage oder der Scheibenwaschanlage, erfolgen soll.

In entsprechender Weise wird auch zusätzlich die Frequenz bei der Ausfilterung berücksichtigt, die durch den Parameter festgelegt ist, und die aus dem Empfangssignal herausgefiltert werden soll.

## Patentansprüche

1. System mit einem Regensensor, mit einem Sensor (1), zum Erfassen elektromagnetischer Strahlung, mit einer Auswerteeinheit (2), die mit dem Sensor (1) verbunden ist, wobei der Sensor (1) die elektromagnetische Strahlung (13, 14, 18) erfasst und ein Empfangssignal an die Auswerteeinheit (2) weiter leitet, mit einem Erkennungsmittel (21) zum Erkennen einer Störstrahlung, wobei das Erkennungsmittel (21) mit der Auswerteeinheit (2) verbunden ist, **dadurch gekennzeichnet, dass** das Erkennungsmittel (3) ein Signal mit einer festgelegten Breite einer Wiederholfrequenz als Störsignal erkennt, wobei die Breite der Wiederholfrequenz als Parameter eingebbar ist.

2. System nach Anspruch 1, **dadurch gekennzeichnet, dass** das Erkennungsmittel (21) eine erkannte Störstrahlung aus dem Empfangssignal entfernt.

3. System nach Anspruch 2, **dadurch gekennzeichnet, dass** eine Filtereinheit (3) vorgesehen ist, wobei die Filtereinheit (3) einen Signalanteil der empfangenen elektromagnetischen Strahlung, der eine festgelegte Wiederholfrequenz aufweist, als Störstrahlung aus dem Empfangssignal herausfiltert.

4. System nach einem der Ansprüche 1 bis 3, **dadurch gekennzeichnet, dass** ein Parameter des Erkennungsmittels (21) einstellbar ist, wobei der Parameter die Wiederholfrequenz des Signalanteils der elektromagnetischen Strahlung festlegt, der als Störstrahlung erkannt oder herausgefiltert wird.

5. System nach einem der Ansprüche 1 bis 4, **dadurch gekennzeichnet, dass** das Erkennungsmittel mit einer Eingabeeinheit (4, 5, 6) verbunden ist, wobei über die Eingabeeinheit (4, 5, 6) ein Parameter einer Störstrahlung einstellbar ist.

6. System nach einem der Ansprüche 3 bis 5, **dadurch gekennzeichnet, dass** die Filtereinheit (3) ein einstellbares Bandpassfilter aufweist, mit dem ein Signalanteil mit einer festgelegten Wiederholfrequenz aus dem Empfangssignal herausgefiltert wird.

7. System nach einem der Ansprüche 1 bis 6, **dadurch gekennzeichnet, dass** das Erkennungsmittel (21) so einstellbar ist, dass das Erkennungsmittel (21) ein Warnlicht mit einer festgelegten Wiederholfrequenz als Störsignal erkennt oder aus dem Empfangssignal herausfiltert.

8. System nach einem der Ansprüche 1 bis 7, **dadurch gekennzeichnet, dass** das Erkennungsmittel (21) in der Weise ausgebildet ist, dass über einen weiteren Parameter eine Wellenlänge einer elektromagnetischen Strahlung festlegbar ist, die durch das Erkennungsmittel (21) als Störsignal erkannt wird.

9. System nach Anspruch 8, **dadurch gekennzeichnet, dass** als Störsignal ein Blaulicht oder Rotlicht in dem Empfangssignal erkannt wird.

10. System nach einem der Ansprüche 1 bis 9, **dadurch gekennzeichnet, dass** ein Signalanteil mit einer Wiederholfrequenz zwischen 10 Hz und 0,2 Hz in dem Empfangssignal als Störsignal erkannt wird.

11. System nach einem der Ansprüche 1 bis 10, **dadurch gekennzeichnet, dass** das Erkennungsmittel (21) das Signal des Sensors auf Signalanteile mit einer festgelegten Wiederholfrequenz überprüft und bei Erkennen eines Signalanteils mit einer festgelegten Wiederholfrequenz den Signalanteil mit der festgelegten Wiederholfrequenz aus dem Signal herausfiltert.

12. Verfahren zum Erkennen einer elektromagnetischen Strahlung, die von einem Regensensor (1) erfasst wird, **dadurch gekennzeichnet, dass** als Störstrahlung eine gepulste elektromagnetische Strahlung in der erfassten Strahlung erkannt wird, die eine festgelegte Wiederholfrequenz aufweist.

13. Verfahren nach Anspruch 12, **dadurch gekennzeichnet, dass** die Wiederholfrequenz zwischen 10 Hz und 0,2 Hz liegt.

14. Verfahren nach einem der Ansprüche 12 oder 13, **dadurch gekennzeichnet, dass** die erkannte Störstrahlung aus der erfassten Strahlung entfernt wird.

15. Verfahren nach Anspruch 14, **dadurch gekennzeichnet, dass** bei Erkennen einer Störstrahlung ein Scheibenwischer mit einer Sondersteuerung gesteuert wird, wobei die Sondersteuerung einem Blockieren des Scheibenwischers oder einer Steuerung entsprechend einem vorausgehenden Wischintervall entspricht.

## Claims

1. System having a rain sensor, with a sensor (1), for detecting electromagnetic radiation, with an evaluation unit (2) which is connected to the sensor (1), wherein the sensor (1) detects the electromagnetic radiation (13, 14, 18) and passes on a reception signal to the evaluation unit (2), with a detection means (21) for detecting interference radiation, wherein the detection means (21) is connected to the evaluation unit (2), **characterized in that** the detection means (21) detects a signal with a defined width of a repetition frequency as an interference signal, wherein the width of the repetition frequency can be input as a parameter.

2. System according to Claim 1, **characterized in that** the detection means (21) removes detected interference radiation from the reception signal.

3. System according to Claim 2, **characterized in that** a filter unit (3) is provided, wherein the filter unit (3) filters out a signal portion of the received electromagnetic radiation which has a defined repetition frequency as interference radiation from the reception signal.

4. System according to one of Claims 1 to 3, **characterized in that** a parameter of the detection means (21) can be set, wherein the parameter defines the repetition frequency of the signal component of the electromagnetic radiation which is detected or filtered out as interference radiation.

5. System according to one of Claims 1 to 4, **characterized in that** the detection means is connected to an input unit (4, 5, 6), and wherein a parameter of interference radiation can be set by means of the input unit (4, 5, 6).

6. System according to one of Claims 3 to 5, **characterized in that** the filter unit (3) has an adjustable bandpass filter with which a signal component with a defined repetition frequency is filtered out from the reception signal.

7. System according to one of Claims 1 to 6, **characterized in that** the detection means (21) can be set in such a way that the detection means (21) detects a warning light with a defined repetition frequency as an interference signal or filters it out from the reception signal.

8. System according to one of Claims 1 to 7, **characterized in that** the detection means (21) is embodied in such a way that a wavelength of electromagnetic radiation can be defined by means of a further parameter, which electromagnetic radiation is detected by the detection means (21) as an interference signal.

9. System according to Claim 8, **characterized in that** a blue light or red light is detected in the reception signal as an interference signal.

10. System according to one of Claims 1 to 9, **characterized in that** a signal component with a repetition frequency between 10 Hz and 0.2 Hz is detected in the reception signal as an interference signal.

11. System according to one of Claims 1 to 10, **characterized in that** the detection means (21) checks the signal of the sensor for signal components with a defined repetition frequency, and when a signal component with a defined repetition frequency is detected, said detection means (21) filters out the signal component with the defined repetition frequency from the signal.

12. Method for detecting an electromagnetic radiation which is detected by a rain sensor (1), **characterized in that** a pulsed electromagnetic radiation which has a defined repetition frequency is detected in the detected radiation as interference radiation.

13. Method according to Claim 12, **characterized in that** the repetition frequency is between 10 Hz and 0.2 Hz.

14. Method according to one of Claims 12 and 13, **characterized in that** the detected interference radiation is removed from the detected radiation.

15. Method according to Claim 14, **characterized in that**, when interference radiation is detected, a windscreen wiper with a special controller is controlled, wherein the special controller corresponds to blocking of the windscreen wiper or to control in accordance with a preceding wiping interval.

## Revendications

1. Système comprenant un détecteur de pluie, comprenant un capteur (1) pour détecter un rayonnement électromagnétique, comprenant une unité d'interprétation (2) qui est reliée avec le capteur (1), le capteur (1) détectant le rayonnement électromagnétique (13, 14, 18) et transmettant un signal reçu à l'unité d'interprétation (2), comprenant des moyens d'identification (21) pour identifier un rayonnement parasite, les moyens d'identification (21) étant reliés avec l'unité d'interprétation (2), **caractérisé en ce que** les moyens d'identification (21) identifient en tant que signal parasite un signal dont la fréquence de répétition présente une largeur donnée, la largeur de la fréquence de répétition pouvant être saisie en tant que paramètre.

2. Système selon la revendication 1, **caractérisé en ce que** les moyens d'identification (21) suppriment du signal reçu un rayonnement parasite identifié.

3. Système selon la revendication 2, **caractérisé en ce qu'**il est prévu une unité de filtrage (3), l'unité de filtrage (3) éliminant par filtrage du signal reçu une part de signal du rayonnement électromagnétique reçu qui présente une fréquence de répétition donnée en tant que rayonnement parasite.

4. Système selon l'une des revendications 1 à 3, **caractérisé en ce qu'**un paramètre des moyens d'identification (21) est réglable, le paramètre définissant la fréquence de répétition de la part de signal du rayonnement électromagnétique qui est identifiée en tant que rayonnement parasite ou éliminée par filtrage.

5. Système selon l'une des revendications 1 à 4, **caractérisé en ce que** les moyens d'identification sont reliés avec une unité de saisie (4, 5, 6), un paramètre d'un rayonnement parasite pouvant être réglé par le biais de l'unité de saisie (4, 5, 6).

6. Système selon l'une des revendications 3 à 5, **caractérisé en ce que** l'unité de filtrage (3) présente un filtre passe-bande réglable avec lequel une part de signal ayant une fréquence de répétition donnée est éliminée par filtrage du signal reçu.

7. Système selon l'une des revendications 1 à 6, **caractérisé en ce que** les moyens d'identification (21) peuvent être réglés de telle sorte que les moyens d'identification (21) identifient en tant que signal parasite ou éliminent par filtrage du signal reçu un feu clignotant ayant une fréquence de répétition donnée.

8. Système selon l'une des revendications 1 à 7, **caractérisé en ce que** les moyens d'identification (21) sont configurés de telle sorte qu'un paramètre supplémentaire permet de définir une longueur d'onde d'un rayonnement électromagnétique qui est identifié par les moyens d'identification (21) en tant que signal parasite.

9. Système selon la revendication 8, **caractérisé en ce que** le signal parasite identifié est une lumière bleue ou une lumière rouge.

10. Système selon l'une des revendications 1 à 9, **caractérisé en ce qu'**une part de signal ayant une fréquence de répétition entre 10 Hz et 0,2 Hz dans le signal reçu est identifiée en tant que signal parasite.

11. Système selon l'une des revendications 1 à 10, **caractérisé en ce que** les moyens d'identification (21) recherchent dans le signal du capteur des parts de signal ayant une fréquence de répétition donnée et, en cas d'identification d'une part de signal ayant une fréquence de répétition donnée, éliminent par filtrage du signal la part de signal ayant la fréquence de répétition donnée.

12. Procédé d'identification d'un rayonnement électromagnétique qui est détecté par un détecteur de pluie (1), **caractérisé en ce qu'**un rayonnement électromagnétique pulsé présent dans le rayonnement détecté et qui présente une fréquence de répétition donnée est identifié en tant que rayonnement parasite.

13. Procédé selon la revendication 12, **caractérisé en ce que** la fréquence de répétition est comprise entre 10 Hz et 0,2 Hz.

14. Procédé selon l'une des revendications 12 ou 13, **caractérisé en ce que** le rayonnement parasite identifié est supprimé du rayonnement détecté.

15. Procédé selon la revendication 14, **caractérisé en ce qu'**en cas d'identification d'un rayonnement parasite, un essuie-glace est commandé avec une commande spéciale, la commande spéciale correspondant à un blocage de l'essuie-glace ou à une commande correspondant à un intervalle préalable.
